# EUROPÄISCHE PATENTSCHRIFT

(11) **EP 2 310 453 B1**
(45) Veröffentlichungstag und Bekanntmachung des Hinweises auf die Patenterteilung: **16.07.2014**
(21) Anmeldenummer: 09781138.4
(22) Anmeldetag: 27.07.2009
(51) Int. Cl.: C08L 67/02

(54) **ERHÖHUNG DER HYDROLYSEBESTÄNDIGKEIT VON BIOLOGISCH ABBAUBAREN POLYESTERN**
INCREASING THE HYDROLYSIS RESISTANCE OF BIODEGRADABLE POLYESTERS
AUGMENTATION DE LA RÉSISTANCE À L HYDROLYSE DE POLYESTERS BIODÉGRADABLES

(30) Priorität: 01.08.2008 EP 08161645; 18.12.2008 EP 08172082
(43) Veröffentlichungstag der Anmeldung: 20.04.2011
(73) Patentinhaber: BASF SE, 67056 Ludwigshafen (DE)
(72) Erfinder: LOOS, Robert, 68165 Mannheim (DE); KÜNKEL, Andreas, 67346 Speyer (DE); YAMAMOTO, Motonori, 68199 Mannheim (DE); FÜSSL, Andreas, 69120 Heidelberg (DE)
(86) Internationale Anmeldenummer: PCT/EP2009/059681
(87) Internationale Veröffentlichungsnummer: WO 2010/012695

(56) Entgegenhaltungen:
- WO-A1-2006/074815
- US-A1- 2005 154 114

## Beschreibung

Die vorliegende Erfindung betrifft ein Verfahren zur Erhöhung der Hydrolysebeständigkeit von biologisch abbaubaren Polyestern auf Basis von aliphatischen und aromatischen Dicarbonsäuren und aliphatischen Dihydroxyverbindungen und einer Säurezahl nach DIN EN 12634 von größer 1,5 mg KOH/g, dadurch gekennzeichnet, dass

dem biologisch abbaubaren Polyester 0,1 bis 5 Gew.-% eines Epoxidgruppen-haltigen Copolymers auf Basis Styrol, Acrylsäureester und/oder Methacrylsäureester im Extruder bei 160 bis 260 °C zugemischt werden.

Biologisch abbaubare Polyester auf Basis von aliphatischen und aromatischen Dicarbonsäuren und aliphatischen Dihydroxyverbindungen (teilaromatische Polyester) und insbesondere auf Basis von aliphatischen Dicarbonsäuren und aliphatischen Dihydroxyverbindungen (aliphatische Polyester) haben für manche Anwendungen den Nachteil, dass sie zu wenig hydrolysestabil sind. Dieses Phänomen tritt bei teilaromatischen Polyestern in der Regel mit einer Säurezahl nach DIN EN 12634 von größer 1, insbesondere von größer 1,5 mg KOH/g auf. Diese Polyester weisen eine sehr beschränkte Hydrolysestabilität auf. Aliphatische Polyester sind in der Regel noch weniger hydrolysestabil als teilaromatische Polyester.

Aus WO 2004/069912 ist bekannt, dass die Hydrolysebeständigkeit von aromatischen Polyestern wie PBT durch Zugabe von epoxidierten natürlichen Ölen oder Fettsäureestern erhöht werden kann. Dieser Effekt reicht jedoch bei weitem nicht aus, die eingangs beschriebenen labilen Biopolymere zu stabilisieren.

US 2005/154 114 und WO 2006/074815 beschreiben den Einsatz von Epoxidgruppenhaltigen Copolymeren auf Basis von Styrol- bzw. (Meth)acrylsäureester als Kompatibilizer polymilchsäurehaltiger Polyestermischungen. Die Erhöhung der Hydrolysestabilität von Polyestern mit einer Säurezahl nach DIN EN 12634 von größer 1,5 mg KOH/g wird in diesen Schriften nicht beschrieben.

Überraschenderweise wurde nun wie eingangs erwähnt gefunden, dass der Zusatz von 0,1 bis 5 Gew.-% eines Epoxidgruppen-haltigen Copolymers auf Basis Styrol, Acrylsäureester und/oder Methacrylsäureester im Extruder bei 160 bis 260°C die Hydrolysestabilität der eingangs erwähnten Biopolymere entscheidend verbessert.

Die höhere Hydrolysebeständigkeit geht mit einer erhöhten Viskosität und einer verbesserten Scherstabilität der Biopolymerschmelzen einher. Die Epoxidgruppenhaltigen Copolymere reagieren dabei unter Verzweigung und Kettenverlängerung mit den durch den thermischen oder hydrolytischen Abbau entstandenen Bruchstücken der verarbeiteten Polyester. Dies führt, einerseits zu einem erhöhten Molekulargewicht, andererseits aber auch zu einer Verringerung von funktionellen Endgruppen, wie beispielsweise Carboxylendgruppen.

Prinzipiell kommen Polyester auf Basis von aliphatischen und aromatischen Dicarbonsäuren und aliphatischen Dihydroxyverbindung, sogenannte teilaromatische Polyester in Betracht. Gemeinsam ist diesen Polyestern, dass sie biologisch abbaubar nach DIN EN 13432 sind. Selbstverständlich sind auch Mischungen mehrerer solcher Polyester geeignet.

Unter teilaromatischen Polyestern sollen erfindungsgemäß auch Polyesterderivate verstanden werden wie Polyetherester, Polyesteramide oder Polyetheresteramide. Zu den geeigneten teilaromatischen Polyestern gehören lineare nicht kettenverlängerte Polyester (WO 92/09654). Bevorzugt werden kettenverlängerte und/oder verzweigte teilaromatische Polyester. Letztere sind aus den eingangs genannten Schriften , WO 96/15173 bis 15176, 21689 bis 21692, 25446, 25448 oder der WO 98/12242, bekannt, auf die ausdrücklich Bezug genommen wird. Mischungen unterschiedlicher teilaromatischer Polyester kommen ebenso in Betracht. Interessante jüngere Entwicklungen basieren auf nachwachsenden Rohstoffen (siehe WO-A 2006/097353, WO-A 2006/097354 sowie EP 08165372.7). Insbesondere sind unter teilaromatischen Polyestern Produkte wie Ecoflex^{®} (BASF SE) und Eastar^{®} Bio, Origo-Bi^{®} (Novamont) zu verstehen.

Zu den besonders bevorzugten teilaromatischen Polyestern zählen Polyester, die als wesentliche Komponenten:
A) eine Säurekomponente aus
a1) 30 bis 99 mol-% mindestens einer aliphatischen Dicarbonsäure oder deren esterbildende Derivate oder Mischungen davon
a2) 1 bis 70 mol-% mindestens einer aromatischen Dicarbonsäure oder deren esterbildendem Derivat oder Mischungen davon und
a3) 0 bis 5 mol-% einer sulfonatgruppenhaltigen Verbindung,
B) eine Diolkomponente ausgewählt aus mindestens einem C₂-bis C₁₂-Alkandiol oder Mischungen davon und gewünschtenfalls darüber hinaus eine oder mehrere Komponenten ausgewählt aus
C) einer Komponente ausgewählt aus
c1) mindestens einer Etherfunktionen enthaltenden Dihydroxyverbindung der Formel 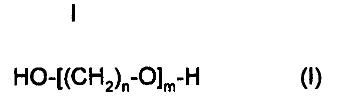 in der n für 2, 3 oder 4 und m für eine ganze Zahl von 2 bis 250 stehen
c2) mindestens einer Hydroxycarbonsäure oder Formel IIa oder lib 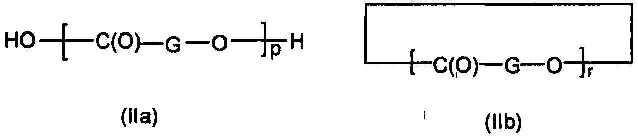 in der p eine ganze Zahl von 1 bis 1500 und r eine ganze Zahl von 1 bis 4 bedeuten, und G für einen Rest steht, der ausgewählt ist aus der Gruppe bestehend aus Phenylen, o- Hydroxyphenylen, -(CH₂)_{q}-, wobei q eine ganze Zahl von 1 bis 5 bedeutet, - C(R)H- und -C(R)HCH₂, wobei R für Methyl oder Ethyl steht
c3) mindestens einem Amino-C₂- bis C₁₂-alkanol oder mindestens einem Amino-C₅-bis C₁₀-cycloalkanol oder Mischungen davon
c4) mindestens einem Diamino-C₁-bis C₈-Alkan
c5) mindestens einer Aminocarbonsäureverbindung ausgewählt aus der Gruppe, bestehend aus Caprolactam, 1,6 Aminocapronsäure, Laurinlactam, 1,12-Aminolaurinsäure und 1,11-Aminoundecansäure
   oder Mischungen aus c1 bis c5
   und
D) einer Komponente ausgewählt aus'
d1) einer Verbindung mit mindestens drei zur Esterbildung befähigten Gruppen,
d2) eines di- oder oligofunktionellen Isoscyanats und/oder Isocyanurat,
d3) eines di- oder oligofunktionellen Epoxids,
oder Mischungen aus d1) bis d3) enthalten.

Die Säurekomponente A der teilaromatischen Polyester enthält in einer bevorzugten Ausführungsform von 30 bis 70, insbesondere von 40 bis 60 mol-% a1 und von 30 bis 70, insbesondere von 40 bis 60 mol-% a2.

Als aliphatische Säuren und die entsprechenden Derivate a1 kommen im Allgemeinen solche mit 2 bis 18 Kohlenstoffatomen, vorzugsweise 4 bis 10 Kohlenstoffatomen, in Betracht. Sie können sowohl linear als auch verzweigt sein. Prinzipiell können jedoch auch Dicarbonsäuren mit einer größeren Anzahl an Kohlenstoffatomen, beispielsweise mit bis zu 30 Kohlenstoffatomen, eingesetzt werden.

Beispielhaft zu nennen sind: Oxalsäure, Malonsäure, Bernsteinsäure, Glutarsäure, 2-Methylglutarsäure, 3-Methylglutarsäure, α-Ketoglutarsäure, Adipinsäure, Pimelinsäure, Azelainsäure, Sebacinsäure, Brassylsäure, Fumarsäure, 2,2-Dimethylglutarsäure, Suberinsäure (Korksäure), Diglykolsäure, Oxalessigsäure, Glutaminsäure, Asparaginsäure, Itaconsäure und Maleinsäure. Dabei können die Dicarbonsäuren oder deren esterbildenden Derivate, einzeln oder als Gemisch aus zwei oder mehr davon eingesetzt werden.

Bevorzugt werden Bernsteinsäure, Adipinsäure, Azelainsäure, Sebacinsäure, Brassylsäure oder deren jeweilige esterbildenden Derivate oder Mischungen davon eingesetzt. Besonders bevorzugt wird Bernsteinsäure, Adipinsäure oder Sebacinsäure oder deren jeweilige esterbildenden Derivate oder Mischungen davon eingesetzt. Besonders bevorzugt wird Adipinsäure oder deren esterbildende Derivate, wie deren Alkylester oder deren Mischungen eingesetzt. Daneben werden Sebacinsäure oder Mischungen von Sebacinsäure mit Adipinsäure und Bernsteinsäure oder Mischungen von Bernsteinsäure mit Adipinsäure bevorzugt eingesetzt.

Bernsteinsäure, Azelainsäure, Sebacinsäure und Brassylsäure haben zudem den Vorteil dass sie als nachwachsende Rohstoffe zugänglich sind.

Die aromatischen Dicarbonsäuren oder deren esterbildende Derivate a2 können einzeln oder als Gemisch aus zwei oder mehr davon eingesetzt werden. Besonders bevorzugt wird Terephthalsäure oder deren esterbildende Derivate wie Dimethylterephthalat, verwendet.

Im Allgemeinen werden die Diole B unter verzweigten oder linearen Alkandiolen mit 2 bis 12 Kohlenstoffatomen, bevorzugt 4 bis 6 Kohlenstoffatomen, oder Cycloalkandiolen mit 5 bis 10 Kohlenstoffatomen ausgewählt.

Beispiele geeigneter Alkandiole sind Ethylenglykol, 1,2-Propandiol, 1,3-Propandiol, 1,2-Butandiol, 1,4-Butandiol, 1,5-Pentandiol, 2,4-Dimethyl-2-ethylhexan-1,3-diol, 2,2-Dimethyl- 1,3-propandiol, 2-Ethyl-2-butyl-1,3-propandiol, 2-Ethyl-2-isobutyl- 1,3-propandiol, 2,2,4-Trimethyl-1,6-hexandiol, insbesondere Ethylenglykol, 1,3-Propandiol, 1,4-Butandiol und 2,2-Dimethyl- 1,3-propandiol (Neopentylglykol); Cyclopentandiol, 1,4-Cyclohexandiol, 1,2-Cyclohexandimethanol, 1,3-Cyclohexandimethanol, 1,4-Cyclohexandimethanol oder 2,2,4,4-Tetramethyl-1,3-cyclobutandiol. Besonders bevorzugt sind 1,4-Butandiol, insbesondere in Kombination mit Adipinsäure als Komponente a1) und 1,3- Propandiol, insbesondere in Kombination mit Sebacinsäure als Komponente a1). 1,3- Propandiol hat zudem den Vorteil, dass es als nachwachsender Rohstoff zugänglich ist. Es können auch Mischungen unterschiedlicher Alkandiole verwendet werden.

Abhängig davon ob ein Überschuss an Säure- oder OH-Endgruppen gewünscht wird, kann entweder die Komponente A oder die Komponente B im Überschuss eingesetzt werden. Nach einer bevorzugten Ausführungsform kann das Molverhältnis der eingesetzten Komponenten A zu B im Bereich von 0,4:1 bis 1,5:1, bevorzugt im Bereich von 0,6:1 bis 1,1:1 liegen.

Die bevorzugten teilaromatischen Polyester sind charakterisiert durch ein Molekulargewicht (Mₙ) im Bereich von 1000 bis 100000, insbesondere im Bereich von 9000 bis 75000 g/mol, bevorzugt im Bereich von 10000 bis 50000 g/mol und einem Schmelzpunkt im Bereich von 60 bis 170, bevorzugt im Bereich von 80 bis 150°C.

Die genannten teilaromatischen Polyester können Hydroxy- und/oder Carboxylendgruppen in jedem beliebigen Verhältnis aufweisen. Die genannten teilaromatischen Polyester können auch endgruppenmodifiziert werden.

Neben den Komponenten A und B können die Polyester, auf denen die erfindungsgemäßen Polyestermischungen basieren, weitere, wie die zuvor genannten Komponenten C und D enthalten.

Im Folgenden wird näher erläutert, was unter Epoxidgruppen-haltigem Copolymer auf Basis Styrol, Acrylsäureester und/oder Methacrylsäureester zu verstehen ist. Die Epoxidgruppen tragenden Einheiten sind vorzugsweise Glycidyl(meth)acrylate. Als vorteilhaft haben sich Copolymere mit einem Glycidylmethacrylat-Anteil von größer 20, besonders bevorzugt von größer 30 und insbesondere bevorzugt von größer 50 Gew.-% des Copolymers erwiesen. Das Epoxid-Äquivalentgewicht (EEW) in diesen Polymeren beträgt vorzugsweise 150 bis 3000 und insbesondere bevorzugt 200 bis 500 g/Äquivalent. Das mittlere Molekulargewicht (Gewichtsmittel) Mw der Polymere beträgt vorzugsweise 2000 bis 25.000, insbesondere 3000 bis 8.000. Das mittlere Molekulargewicht (Zahlenmittel) Mₙ der Polymere beträgt vorzugsweise 400 bis 6.000, insbesondere 1000 bis 4.000. Die Polydispersität (Q) liegt im Allgemeinen zwischen 1.5 und 5. Epoxidgruppen-haltige Copolymere des obengenannten Typs werden beispielsweise von der BASF Resins B.V. unter der Marke Joncryl^{®} ADR vertrieben. Als Kettenverlängerer besonders geeignet ist Joncryl^{®} ADR 4368, langkettige Acrylate wie in der EP Anm. Nr. 08166596.0 beschrieben und Cardura^{®} E10 der Fa. Shell.

Epoxidgruppen-haltige Copolymere des obengenannten Typs werden in 0,1 bis 5 Gew.-%, bevorzugt in 0,1 bis 2 Gew.-%, und besonders bevorzugt in 0,2 bis 1 Gew.-%, bezogen auf das Biopolymer eingesetzt.

Eine noch höhere Hydrolysestabilität lässt sich bei den eingesetzten Polyestern erzielen, wenn außer dem zuvor beschriebenen Epoxidgruppen-haltigen Copolymer weitere literaturbekannte Säurefänger zugesetzt werden. Dieses Vorgehen ist vor allem bei Polyestern mit einer hohen Ausgangssäurezahl bevorzugt.

Als Säurefänger haben sich insbesondere Verbindungen ausgewählt aus der Gruppe bestehend aus Bisoxazolin, Polyoxazolin, Carbodiimid, polymeres Carbodiimid, Dicaprolactam, polymeres Caprolactam, Bisoxazin und Polyoxazin bewährt.

Bisoxazoline sind im Allgemeinen erhältlich durch das Verfahren aus Angew. Chem. Int. Ed., Vol. 11 (1972), S. 287-288. Besonders bevorzugte Bisoxazoline und Bisoxazine sind solche, in denen das Brückenglied eine Einfachbindung, eine (CH₂)_{z}-Alkylengruppe, mit z = 2,3 oder 4 wie Methylen, Ethan-1,2-diyl, Propan-1,3-diyl, Propan-1,2-diyl, oder eine Phenylengruppe bedeutet. Als besonders bevorzugte Bisoxazoline seien 2,2'-Bis(2-oxazolin), Bis(2-oxazolinyl)methan, 1,2-Bis(2-oxazolinyl)ethan, 1,3-Bis(2-oxazolinyl)propan oder 1,4-Bis(2-oxazolinyl)butan, insbesondere 1,4-Bis(2-oxazoiinyl)benzol, 1,2-Bis(2-oxazolinyl)benzol oder 1,3-Bis(2-oxazolinyl)benzol genannt. Weitere Beispiele sind: 2,2'-Bis(2-oxazolin, 2,2'-Bis(4-methyl-2-oxazolin), 2,2'-Bis(4,4'-dimethyl-2-oxazolin); 2,2'-Bis(4-ethyl-2-oxazolin), 2,2'-Bis(4,4'-diethyl-2-oxazolin), 2,2'-Bis(4-propyl-2-oxazolin), 2,2'-Bis(4-butyl-2-oxazolin), 2,2'-Bis(4-hexyl-2-oxazolin), 2,2'-Bis(4-phenyl-2-oxazolin), 2,2'-Bis(4-cyclohexyl-2-oxazolin), 2,2'-Bis(4-benzyl-2-oxazolin), 2,2'-p-Phenylen-bis(4-methyl-2-oxazolin), 2,2'-p-Phenylen-bis(4,4'dimethyl-2-oxazolin), 2,2'-m-Phenylen-bis(4-methyl-2-oxazolin), 2,2'-m-Phenylen-bis(4,4'-dimethyl-2-oxazolin), 2,2'-Hexamethylen-bis(2-oxazolin), 2,2'-Octamethylen-bis(2-oxazolin), 2,2'-Decamethylen-bis(2-oxazolin), 2,2'-Ethylenbis(4-methyl-2-oxazolin), 2,2'-Tetramethylen-bis(4,4'dimethyl-2-oxazolin), 2,2'-9,9'-Diphenoxyethan-bis(2-oxazolin), 2,2'-Cyclohexylen-bis(2-oxazolin) und 2,2'-Diphenylen-bis(2-oxazolin).

Bevorzugte Bisoxazine sind 2,2'-Bis(2-oxazin), Bis(2-oxazinyl)methan, 1,2-Bis(2-oxazinyl)ethan, 1,3-Bis(2-oxazinyl)propan oder 1,4-Bis(2-oxazinyl)butan, insbesondere 1,4-Bis(2-oxazinyl)benzol, 1,2-Bis(2-oxazinyl)benzol oder 1,3-Bis(2-oxazinyl)benzol.

Carbodiimide und polymere Carbodiimide werden beispielsweise von der Fa. Lanxxess unter dem Markennamen Stabaxol^{®} oder von der Fa. Elastogran unter dem Markennamen Elastostab^{®} vertrieben.

Beispiele sind: N,N'-Di-2,6-diisopropylphenylcarbodiimid, N,N'-Di-o-tolylcarbodiimid, N,N'-Diphenylcarbodiimid, N,N'-Dioctyldecylcarbodiimid, N,N'-Di-2,6-dimethylphenylcarbodiimid, N-Tolyl-N'-cyclohexylcarbodiimid, N,N'-Di-2,6-di-tert.-butylphenylcarbodiimid, N-Tolyl-N'-phenylcarbodiimid, N,N'-Di-p-nitrophenylcarbodiimid, N,N'-Di-p-aminophenylcarbodiimid, N,N'-Di-p-hydroxyphenylcarbodiimid, N,N'-Di-cyclohexylcarbodiimid, N,N'-Di-p-tolylcarbodiimid, p-Phenylen-bis-di-o-tolylcarbodiimid, p-Phenylen-bis-dicyclohexylcarbodiimid, Hexamethylen-bis-dicyclohexylcarbodiimid, 4,4'-Dicyclohexylmethancarbodiimid, Ethylen-bis-diphenylcarbodiimid, N,N'-Benzylcarbodiimid, N-Octadecyl-N'-phenylcarbodiimid, N-Benzyl-N'-phenylcarbodiimid, N-Octadecyl-N'-tolylcarbodilmid, N-Cyclohexyl-N'-tolylcarbodiimid, N-Phenyl-N'-tolylcarbodiimid, N-Benzyl-N'-tolylcarbodiimid, N,N'-Di-o-ethylphenylcarbodiimid, N,N'-Di-p-ethylphenylcarbodiimid, N,N'-Di-o-isopropylphenylcarbodiimid, N,N'-Di-p-isopropylphenylcarbodiimid, N,N'-Di-o-isobutylphenylcarbodiimid, N,N'-Di-p-isobutylphenylcarbodiimid, N,N'-Di-2,6-diethylphenylcarbodiimid, N,N'-Di-2-ethyl-6-isopropylphenylcarbodiimid, N,N'-Di-2-isobutyl-6-isopropylphenylcarbodiimid, N,N'-Di-2,4,6-trimethylphenylcarbadiimid, N,N'-Di-2,4,6-triisopropylphenylcarbodiimid, N,N'-Di-2,4,6-triisobutylphenylcarbodiimid, Diisopropylcarbodiimid, Dimethylcarbodiimid, Diisobutylcarbodiimid, Dioctylcarbodiimid, t-Butylisopropylcarbodiimid, Di-β-naphthylcarbodiimid und Di-t-butylcarbodiimid.

Die Verbindungen (Säurefänger) werden vorzugsweise in Mengen von 0,01 bis 5, bevorzugt 0,05 bis 2, besonders bevorzugt 0,08 bis 1 Gew.-%, bezogen auf die Polymermenge eingesetzt.

Weiterhin hat sich das erfindungsgemäße Verfahren bei Polymermischungen als äußerst hilfreich erwiesen, die neben dem biologisch abbaubaren (teilaromatischen) Polyester zusätzlich eines oder mehrere biologisch abbaubare Polymere ausgewählt aus der Gruppe bestehend aus Polymilchsäure, Polyhydroxyalkanoat, Polycaprolacton und Stärke enthalten.
Bevorzugte Polyestermischungen enthalten:
30 bis 70 Gew.- % eines teilaromatischen Polyesters und
70 bis 30 Gew.-% eines oder mehrerer Polymere ausgewählt aus der Gruppe bestehend aus: Polymilchsäure und Polyhydroxyalkanoat und
0 bis 5 Gew.-% eines epoxidhaltigen Poly(meth)acrylats.

Als biologisch abbaubaren Polyester ist beispielsweise Polymilchsäure geeignet. Polymilchsäure mit dem folgenden Eigenschaftsprofil wird bevorzugt eingesetzt:
einer Schmelzvolumenrate (MVR bei 190° C und 2.16 kg nach ISO 1133 von 0.5 - vorzugsweise 2 - bis 30 insbesondere 9 ml/10 Minuten
einem Schmelzpunkt unter 240° C;
einem Glaspunkt (Tg) größer 55°C
einem Wassergehalt von kleiner 1000 ppm
einem Monomeren-Restgehalt (Lactid) von kleiner 0.3%.
einem Molekulargewicht von größer 80 000 Dalton.

Bevorzugte Polymilchsäuren sind beispielsweise NatureWorks® 4020 oder 4042D (Polylmilchsäure der Fa. NatureWorks).

Unter Polyhydroxyalkanoaten werden in erster Linie Poly-4-hydroxybutyrate und Poly-3-hydroxybutyrate verstanden, weiterhin sind Copolyester der vorgenannten Hydroxybutyrate mit 3-Hydroxyvaleraten oder 3-Hydroxyhexanoat umfasst. Poly-3-hydroxybutyrate-co-4-hydroxybutyrate sind insbesondere von der Fa. Metabolix bekannt. Sie werden unter dem Handelsnamen Mirel® vertrieben. Poly-3-hydroxybutyrate-co-3-hydroxyhexanoate sind von der Fa. P&G oder Kaneka bekannt. Poly-3-hydroxybutyrate werden beispielsweise von der Fa. PHB Industrial unter dem Markennamen Biocycle® und von der Fa. Tianan unter dem Namen Enmat® vertrieben.

Die Polyhydroxyalkanoate weisen in der Regel ein Molekulargewicht Mw von 100.000 bis 1.000.000 und vorzugsweise von 300.000 bis 600.000 auf.

Polycaprolacton wird von der Fa. Daicel unter dem Produktnamen Placcel^{®} vermarktet.

Unter Stärke wird nicht modifizierte Stärke wie auch Cerealien und Cellulose sowie mit Weichmachern wie beispielsweise Glycerin oder Sorbit thermoplastifizierte Stärke verstanden.

Die Polymerschmelzen können die üblichen Additive enthalten. Der hier gefundene Effekt der Stabilisierung der Schmelzen von Biopolymeren durch Zugabe von Epoxidgruppen-haltigen Copolymeren wird dadurch nicht betroffen. Übliche Additiven sind beispielsweise
Nukleierungsmittel wie Talkum, Kreide, Ruß, Graphit, Calcium- oder Zinkstearat, Poly-D-Milchsäure, N,N'ethylen-bis-12-hydroxystearamid, Polyglykolsäure,
Gleit- und Antiblockmittel,
Wachse,
Antistatika,
Weitere Kompatibilizer wie Silane, Maleinsäureanhydrid, Fumarsäureanhydrid, Isocyanate, Disäurechloride,
Antifog-Mittel,
UV-Stabilisatoren oder
Farbstoffe zu versehen
Füllstoffe wie Glasfasern, Stärke - mit Weichmachern wie Glycerin bzw. Sorbitol plastifiziert oder nicht plastifiziert -, Stärkederivate, Cerealien, Cellulosederivate, Talkum, Kreide, Ruß und Graphit.

### Beispiele

Die Schmelztemperaturen der Biopolymere wurden durch DSC Messungen mit einem Gerät Exstet DSC 6200R der Fa. Seiko bestimmt:
10 bis 15 mg der jeweiligen Proben wurden unter einer Stickstoffatmosphäre mit einer Aufheizrate von 20°C/min von -70°C auf 200°C aufgeheizt. Als Schmelztemperaturen der Proben wurden die Peaktemperaturen des dabei beobachteten Schmelzpeaks angegeben. Als Referenz wurde jeweils ein leerer Probentiegel verwendet.

Die Viskositätszahlen wurden mit einem Miko-Ubbelohde Gerät Typ: M-II bei 25°C, in Phenol/o-Dichlorbenzol 1:1 gemäß DIN EN ISO 1628 gemessen. Die Viskositätszahlen werden in cm³/g angegeben.
Kapillarkonstante: 0.09185
Meßtemperatur [°C]: 5
Lösemittel: Phenol / o-Dichlorbenzol 1:1 (PODB)
Durchlaufzeit Lösemittel [s]: 28.54
Hagenbach-Korrektur des Lösemittels [s]: 0.01
Konzentrationen: 0.5g Polymer auf 100mL Lösungsmittel

Die Bestimmung der Säurezahlen erfolgte nach DIN EN 12634: Die Proben wurden in Pyridin/Toluol gelöst und mit Wasser/THF verdünnt und anschließend potentiografisch mit Potentiometer der Fa. Metrohm titriert. Die Säurezahlen werden in der Einheit "mg KOH pro Gramm Polymer" angegeben.

Die Schmelzeviskosität der Proben über die Zeit wurde mit einem schubspannungsgesteuerten Platte-Platte Rotationsrheometer SR2 der Firma Rheometric Scientific in Anlehnung an ISO 6721-10 bestimmt. Der Plattendurchmesser betrug 25 mm, der Plattenabstand 1 mm. Die eingestellte Schubspannung lag bei 100 Pa, die Messzeit betrug 30 min, es wurde 5 min vorgeheizt. Die Messtemperatur ist jeweils angegeben.

Der Schmelzfließindex (Melt-Volume-Rate = MVR) der Proben wurde nach ISO 1133 bestimmt.

Eingesetzte Materialien:
1-i) teilaromatischer Polyester der Marke Ecoflex^{®} FBX 7011 (BASF SE)
1-ii) teilaromatischer Polyester der Marke Eastar Bio^{®} (Fa. Eastman Chem. Comp.) oder Mischungen aus 1-i) und 1-ii)
1-iii) 120kg 1,4-Butandiol, 91.3 kg Dimethylterepthalat und 0.2kg Glycerin wurden mit 0.2 kg Tetrabutylorthotitanat als Katalysator unter Erhitzen und Abdestillieren des Methanols vollständig umgeestert und anschließend mit 77.5 kg Adipinsäure versetzt. Es wurde zunächst unter Normaldruck das Wasser abdestilliert und die Polykondensation dann bei bis zu 250 °C und einem Endvakuum < 10 mbar für 4h vervollständigt bevor das Polymer als Strang granuliert wurde. Der aliphatisch-aromatische Polyester hatte eine Säurezahl von 3.8 und einer Viskositätszahl von 115.
1-iv) Polymilchsäure (PLA) Typ 4042D der Firma Natureworks LLC
2-i) Epoxidgruppen-haltiges Copolymer: Joncryl^{®} ADR 4368 der Fa. BASF Resins B.V.
3-i) Batch A: 20 Gew.-%iger Masterbatches von Jöncryl ADR 4368 in Ecoflex^{®} FBX 7011 (Herstellung siehe EP-A 1838784)
3-ii) Batch B: 10 Gew.-%iger Masterbatch von Erucasäureamid in Ecoflex^{®} FBX 7011

Versuche am Miniextruder:
Gerät: DSM Zweischnecken Miniextruder
Temperatur: 240 °C
20g Polymergranulat wurden bei 240 °C aufgeschmolzen und dann die angegebenen Mengen an Additiven zudosiert (siehe Tabelle 1). Nach der angegebenen Reaktionsdauer wurde die Polymerschmelze abgelassen und analysiert.

Während der Messung wird die Kraft (in Newton) aufgezeichnet, die die Polymerschmelze auf die Bodenplatte ausübt. Diese Kraft ist proportional zur Viskosität der Schmelze, so dass sich Änderungen der Schmelzviskosität direkt online beobachten und aufzeichnen lassen.

Versuche im Extrusionstechnikum:
Gerät: ZSK 25
Dosierung: Coldfeed

Zur Granulierung wurde ein Unterwassergranulator eingesetzt und die Polymergranulate im Anschluss bei 70°C im Vakuum getrocknet.

### Hydrolysetests:

Die Hydrolysebeständigkeit wurde durch Lagerung der Polymergranulate in Wasser bei unterschiedlichen Temperaturen überprüft. Fortschreitende Hydrolyse führte zu einer Abnahme der Polymerkettenlänge, was durch die Abnahme der Viskositätszahl über die Zeit bestimmt werden konnte.

Durchführung: 10g des Polymergranulats wurden in einem Trockenschrank bei der angegebenen Temperatur in 60-70 mL deionisiertem Wasser gelagert. In den angegebenen Zeitabständen wurden ca. 2g der Probe entnommen, im Vakuum getrocknet und die Viskositätszahl bestimmt.

### Beispiel 1:

5850g eines Polyesters 1-i und 150g Batch 3-i wurde auf einem Zweischneckenextruder compoundiert. Die Zonentemperatur betrug im Einzugsbereich 150 °C und ansonsten 220 °C.
Die Analyse ergab einen MVR (5kg / 190 °C) von 4,69 cm³/10 Min, eine Viskositätszahl von 225 cm³/g und eine Säurezahl von 0,9 mg KOH/g.

### Vergleichsbeispiel 1:

6000g eines Polyesters 1-i mit einem MVR (2.11kg / 190 °C) von 5,11 cm³/10 Min, einer Viskositätszahl von 187 cm³/g und einer Säurezahl von 1,1 mg KOH/g.

### Folienherstellung:

Die Compounds der Beispiele 1-3 und des Vergleichsbeispiele 1-2 konnten auf einer Chill-Roll problemlos zu Folien hoher Qualität ohne Stippen mit einer Dicke von ca. 50 Mikrometern extrudiert werden.

**Tabelle 1: Hydrolysestabilität von Beispiel 1 und Vergleichsbeispiel 1**

| | Tage | Vergleichsbeispiel 1 | Beispiel 1 |
|---|---|---|---|
| Viskositätszahl bei 60 °C | 0 | 187 | 225 |
| | 7 | 164 | 185 |
| | 21 | 108 | 132 |
| Viskositätszahl bei 40 °C | 0 | 187 | 225 |
| | 7 | 183 | 210 |
| | 21 | 172 | 200 |
| | 45 | 151 | 186 |

Die Hydrolysestabilität von Beispiel 1 und Vergleichsbeispiel 1 wurde bei 60 °C und 40 °C bestimmt. Es zeigte sich bei beiden Temperaturen, dass die erfindergemäße Verbindung eine bessere Hydrolysestabilität aufweist als das Vergleichsbeispiel 1.

### Beispiel 2:

Eine Mischung aus 4650g Polyester 1-i (Ecoflex FBX 7011), 1200g Polyester1-ii (Eastar Bio) und 150g Batch 3-i wurde auf einem Zweischneckenextruder analog zu Beispiel 1 compoundiert.
Die Analyse ergab einen MVR (5kg / 190 °C) von 2,14 cm³/10 Min, eine Viskositätszahl von 216 cm³/g und eine Säurezahl von 1,8 mg KOH/g.

### Beispiel 3:

Eine Mischung aus 4560g Polyester 1-i, 1200g Polyester1-ii (Eastar® Bio) und 240g Batch 3-i wurde auf einem Zweischneckenextruder analog zu Beispiel 1 compoundiert. Die Analyse ergab einen MVR (5kg /190 °C) von 0,41 cm³/10 Min, eine Viskositätszahl von 211 cm³/g und eine Säurezahl von 1,5 mg KOH/g.

**Tabelle 2: Hydrolysestabilität von Beispiel 2 und 3**

| | Tage | Beispiel 2 | Beispiel 3 |
|---|---|---|---|
| Viskositätszahl bei 60 °C | 0 | 216 | 211 |
| | 7 | 144 | 166 |
| | 21 | 84 | 95 |
| Viskositätszahl bei 40 °C | 0 | 216 | 211 |
| | 7 | 196 | 204 |
| | 21 | 175 | 190 |
| | 45 | 149 | 166 |

Die Hydrolysestabilität der Verbindungen aus Beispiel 2 und 3 wurden bei 60 °C und 40 °C bestimmt. Beispiel 3 zeigt im Vergleich zu Beispiel 2 eine niedrigere Säurezahl und eine höhere Hydrolysestabilität. Beide Effekte lassen sich auf die höhere Zugabe von Batch 3-i (Joncryl® ADR 4368) zurückführen.

Eine noch höhere Hydrolysestabilität lässt sich bei den eingesetzten Polyestern vor allem bei einer noch höheren Ausgangssäurezahl erzielen, wenn außer Joncryl® ADR 4368 weitere Additive zugesetzt wurden.

### Beispiel 4

20g Verbindung 1-iii wurden in einem Miniextruder bei 240 °C aufgeschmolzen und mit 0.8% Joncryl ADR 4368 und 2 % 1,4-Phenylen-bis(2-oxazin) versetzt. Nach ca. 10 min wurde die Schmelze abgelassen und analysiert. Die in Tabelle 3 angegebenen Werte sind Durchschnittswerte aus 2 Versuchen.

### Beispiel 5

20g Verbindung 1-iii wurden in einem Miniextruder bei 240 °C aufgeschmolzen und mit 0.8% Joncryl ADR 4368 und 2 % 1,3-Phenylen-bis(2-oxazolin) versetzt. Nach ca. 10 min wurde die Schmelze abgelassen und analysiert. Die in Tabelle 3 angegebenen Werte sind Durchschnittswerte aus 2 Versuchen.

### Beispiel 6

20g Verbindung 1-iii wurden in einem Miniextruder bei 240 °C aufgeschmolzen und mit 0.8% Joncryl ADR 4368 und 2 % Stabaxol P versetzt. Nach ca. 10 min wurde die Schmelze abgelassen und analysiert. Die in Tabelle 3 angegebenen Werte sind Durchschnittswerte aus 2 Versuchen.

### Vergleichsbeispiel 3

20g Verbindung 1-iii wurden in einem Miniextruder bei 240 °C aufgeschmolzen und mit 0.8% Joncryl ADR 4368 versetzt. Man beobachtete einen Anstieg der Viskosität. Nach 10 min wurde die Schmelze abgelassen und analysiert. Die in Tabelle 3 angegebenen Werte sind Durchschnittswerte aus 2 Versuchen.

**Tabelle 3: Analyseergebnisse der Beispiele 4 bis 6 und von Vergleichsbeispiel 3**

| | Beispiel 4 | Beispiel 5 | Beispiel 6 | Vergleichsbeispiel 3 |
|---|---|---|---|---|
| | | | 157 | |
| Viskositätszahl | 159 | 134 | | 154 |
| Säurezahl | 1.0 | 1.8 | 0.8 | 3.4 |

Die Beispiele 4-6 zeigen, dass sich die Säurezahl durch die Kombination von Joncryl ADR 4368 mit den genannten Additiven gegenüber dem Vergleichsbeispiel 3 noch deutlich absenken lässt.

### Polyesterblends mit Polymilchsäure:

### Beispiel 7:

Eine Mischung aus 2580g Polyester 1-i (Ecoflex FBX 7011), 600g Polyester 1-ii (Eastar Bio), 2700g Polyester 1-iv (PLA 4042D), 60g Batch 3-i und 60g Batch 3-ii wurde auf einem Zweischneckenextruder analog zu Beispiel 1 compoundiert.
Die Analyse ergab einen MVR (5kg / 190 °C) von 3,18 cm³/10 Min und eine Viskositätszahl von 233 cm³/g.

### Beispiel 8:

Eine Mischung aus 2490g Polyester 1-i (Ecoflex FBX 7011), 600g Polyester 1-ii (Eastar Bio), 2700g Polyester 1-iv (PLA 4042D), 150g Batch 3-i und 60g Batch 3-ii wurde auf einem Zweischneckenextruder analog zu Beispiel 1 compoundiert.
Die Analyse ergab einen MVR (5kg / 190 °C) von 0.66 cm³/10 Min und eine Viskositätszahl von 248 cm³/g.

### Beispiel 9:

Eine Mischung aus 2400g Polyester 1-i (Ecoflex FBX 7011), 600g Polyester 1-ii (Eastar Bio), 2700g Polyester 1-iv (PLA 4042D), 240g Batch 3-i und 60g Batch 3-ii wurde auf einem Zweischneckenextruder analog zu Beispiel 1 compoundiert.
Die Analyse ergab einen MVR (21.6 kg / 190 °C) von 14.8 cm³/10 Min und eine Viskositätszahl von 241 cm³/g.

**Tabelle 4: Hydrolysestabilität von Beispielen 7 bis 9**

| | Tage | Beispiel 7 | Beispiel 8 | Beispiel 9 |
|---|---|---|---|---|
| Menge an Batch 3-i | | 60g | 150g | 250g |
| Viskositätszahl bei 60 °C | 0 | 233 | 248 | 241 |
| | 3 | 161 | 186 | 184 |
| | 7 | 102 | 122 | 157 |
| Viskositätszahl bei 40 °C | 3 | 222 | 243 | 247 |
| | 7 | 214 | 233 | 244 |
| | 21 | 196 | 228 | 237 |
| | 45 | 175 | 199 | 222 |

Die höheren Mengen an Batch 3-i (Joncryl ADR 4368) in den Beispielen 8 und 9 zu führen gegenüber dem Beispiel 7 (mit geringerer Menge an Batch 3-i zu einer höheren Viskositätszahl nach Lagerung, d.h. einer verbesserten Hydrolysestabilität der Polyesterblends mit Polymilchsäure.

## Patentansprüche

1. Verfahren zur Erhöhung der Hydrolysebeständigkeit von biologisch abbaubaren Polyestern auf Basis von aliphatischen und aromatischen Dicarbonsäuren und aliphatischen Dihydroxyverbindungen und einer Säurezahl nach DIN EN 12634 von größer 1,5 mg KOH/g, **dadurch gekennzeichnet, dass**
dem biologisch abbaubaren Polyester 0,1 bis 5 Gew.-% eines Epoxidgruppenhaltigen Copolymers auf Basis Styrol, Acrylsäureester und/oder Methacrylsäureester im Extruder bei 160 bis 260 °C zugemischt werden.

2. Verfahren nach Anspruch 1, **dadurch gekennzeichnet, dass** das Epoxidgruppen-haltige Copolymer als Epoxidbaustein ein Glycidylacrylat oder Glycidylmethacrylat enthält.

3. Verfahren nach Anspruch 2, **dadurch gekennzeichnet, dass** das Epoxidgruppenhaltige Copolymer ein Epoxid-Äquivalentgewicht von 150 bis 3000 g/Äquivalent aufweist.

4. Verfahren nach den Ansprüchen 1 bis3, **dadurch gekennzeichnet, dass** zusätzlich zu dem Epoxidgruppen-haltigen Copolymer ein Hilfsstoff ausgewählt aus der Gruppe bestehend aus Bisoxazolin, Polyoxazolin, Carbodiimid, polymeres Carbodiimid, Dicaprolactam, polymeres Caprolactam, Bisoxazin und Polyoxazin eingesetzt wird.

## Claims

1. A method of increasing the hydrolysis resistance of biodegradable polyesters based on aliphatic and aromatic dicarboxylic acids and aliphatic dihydroxy compounds and a DIN EN 12634 acid number of greater than 1.5 mg KOH/g, which comprises
admixing the biodegradable polyester with 0.1% to 5% by weight of an epoxy-containing copolymer based on styrene, acrylic ester and/or methacrylic ester in an extruder at 160 to 260°C.

2. The method according to claim 1 wherein the epoxy-containing copolymer comprises a glycidyl acrylate or glycidyl methacrylate as epoxy component.

3. The method according to claim 2 wherein the epoxy-containing copolymer has an epoxy equivalent weight of 150 to 3000 g/equivalent.

4. The method according to claims 1 to 3 wherein an auxiliary material selected from the group consisting of bisoxazoline, polyoxazoline, carbodiimide, polymeric carbodiimide, dicaprolactam, polymeric caprolactam, bisoxazine and polyoxazine is used in addition to the epoxy-containing copolymer.

## Revendications

1. Procédé pour l'augmentation de la résistance à l'hydrolyse de polyesters biodégradables à base d'acides dicarboxyliques aliphatiques et aromatiques et de composés aliphatiques dihydroxy et présentant un indice d'acide selon la norme DIN EN 12634 supérieure à 1,5 mg de KOH/g, **caractérisé en ce que** le polyester biodégradable est additionné de 0,1 à 5% en poids d'un copolymère contenant des groupes époxyde à base de styrène, d'ester de l'acide acrylique et/ou d'ester de l'acide méthacrylique dans une extrudeuse à 160 à 260°C.

2. Procédé selon la revendication 1, **caractérisé en ce que** le copolymère contenant des groupes époxyde contient comme élément époxyde un acrylate de glycidyle ou un méthacrylate de glycidyle.

3. Procédé selon la revendication 2, **caractérisé en ce que** le copolymère contenant des groupes époxyde présente un poids équivalent d'époxyde de 150 à 3000 g/équivalent.

4. Procédé selon les revendications 1 à 3, **caractérisé en ce qu'**on utilise en plus du copolymère contenant des groupes époxyde un adjuvant choisi dans le groupe constitué par la bisoxazoline, la polyoxazoline, le carbodiimide, le carbodiimide polymère, le dicaprolactame, le caprolactame polymère, la bisoxazine et la polyoxazine.
